## Europäisches Patentamt
## European Patent Office
## Office européen des brevets

(19)

(11) Veröffentlichungsnummer: **0 164 565**
**B1**

(12) **EUROPÄISCHE PATENTSCHRIFT**

(45) Veröffentlichungstag der Patentschrift:
14.12.88

(51) Int. Cl.⁴: **H 04 L 1/20**

(21) Anmeldenummer: **85105528.5**

(22) Anmeldetag: **07.05.85**

(54) **Messverfahren für Datenübertragungsqualität.**

(30) Priorität: **13.06.84 DE 3421852**

(43) Veröffentlichungstag der Anmeldung:
**18.12.85 Patentblatt 85/51**

(45) Bekanntmachung des Hinweises auf die Patenterteilung:
**14.12.88 Patentblatt 88/50**

(84) Benannte Vertragsstaaten:
**AT CH DE FR LI NL**

(56) Entgegenhaltungen:
**DE-A-2 538 351**
**FR-A-2 481 029**

(73) Patentinhaber: **ANT Nachrichtentechnik GmbH, Gerberstrasse 33, D-7150 Backnang (DE)**

(72) Erfinder: **Budnik, Norbert, Dipl.- Ing., Kantstrasse 23, D-7150 Backnang (DE)**

(74) Vertreter: **Wiechmann, Manfred, Dipl.- Ing., ANT Nachrichtentechnik GmbH Gerberstrasse 33 Postfach 11 20, D-7150 Backnang (DE)**

LIBER, STOCKHOLM 1988

## Beschreibung

Die Erfindung betrifft ein Verfahren zur Messung der Übertragungsqualität eines FM-WT-Datenkanals gemäß Oberbegriff des Patentanspruchs 1.

Typische Bitfehlerursachen bei der Datenübertragung über einen FM-WT-Kanal sind ein zu geringer Geräuschabstand oder ein sich ergebender Phasenjitter. Durch diese Ursachen werden Phasenmodulationen, die durch Differentiation bei Frequenzmodulation ohnehin auftreten, vorgetäuscht, beispielsweise durch zeitlichen Versatz des Nulldurchgangs einer Trägerschwingung in Folge einer Addition eines Störimpulses.

Durch die Patentschrift DE-C-2 256 081 ist eine Fernmeldeanlage mit Verbindungsverkehr zwischen ortsfesten und beweglichen Teilnehmerstellen über Relaisstationen bekanntgeworden, bei der die Verbindungen der beweglichen Teilnehmerstellen zu der jeweils nächstgelegenen Relaisstation in einem ersten Frequenzband im Codemultiplexverfahren durch zugeordnete Codes erfolgt, bei der die Verbindungen der Relaisstationen zu den jeweils in ihrem Sendebereich befindlichen beweglichen Teilnehmerstellen in einem zweiten Frequenzband durch die aus den zugeordneten Codes bestehenden Summensignale durchgeführt werden und bei der der Verbindungsverkehr über mehrere aufeinanderfolgende Relaisstationen abwickelbar ist, und wobei bei den Relaisstationen vorgesehene, den Empfangspegel überwachende Schwellwerteinrichtungen beim Unterschreiten eines bestimmten Wertes des von einer im Sendebereich befindlichen beweglichen Teilnehmerstelle herrührenden Empfangspegels ansprechen und eine Signaleinrichtung anlassen, die den zugeordneten Code der betreffenden Teilnehmerstelle einer Gruppe benachbarter Relaisstationen meldet. Bei dieser Funkfernmeldeanlage wird also die Übertragungsqualität in Bezug gesetzt zu einem bestimmten Empfangspegelwert.

Der vorliegenden Erfindung lag die Aufgabe zugrunde, ein Verfahren anzugeben, das es ermöglicht, schon vor einer Datenübertragung eine möglichst genaue Vorhersage über die zu erwartende Übertragungsqualität zu treffen.

Die Lösung erfolgt mit den im Hauptanspruch gekennzeichneten Merkmalen.

Das erfindungsgemäße Verfahren weist den Vorteil eines sehr geringen Aufwandes auf bei gleichzeitiger genauer Aussage und Vorhersage der zu erwartenden Bitfehlerwahrscheinlichkeit einer sich anschließenden FM-WT-Datenübertragung.

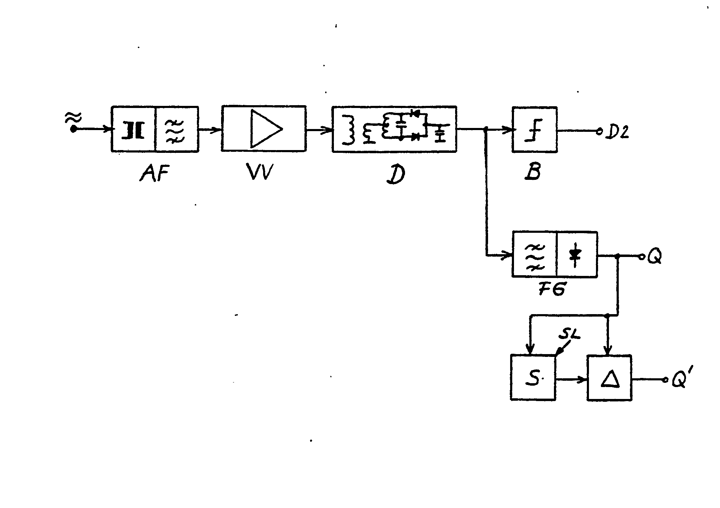

Es folgt nun die Beschreibung der Erfindung anhand der Figur.

Die Figur zeigt das Blockschaltbild eines Empfängers, mit dem das erfindungsgemäße Verfahren durchgeführt werden kann. Das eintreffende Empfangssignal eines FM-WT-Datenkanals wird über eine Übertragerauskopplung mit anschließender Bandpassfilterung AF einem Vorverstärker VV zugeführt, an dessen Ausgang ein Diskriminator D zur Frequenzdemodulation angeschlossen ist. Am Ausgang des Diskriminators D ist ein Begrenzer B angeschaltet, an dessen Ausgang das Datensignal D2 abnehmbar ist. Erfindungsgemäß wird nun das Empfangssignal des Datenkanals im nichtmodulierten Zustand, beispielsweise im Datenübertragungspausen, in derselben Weise wie das Empfangsdatensignal vorgefiltert, vorverstärkt und dem Diskriminator D zugeführt. Am Ausgang des Diskriminators ist ein Tiefpaß F mit anschließender Gleichrichtung G angeschaltet. Das am Ausgang der Gleichrichterschaltung auftretende Ausgangssignal Q ist ein Maß für den Jitter und damit auch für die auftretende Bitfehlerrate während einer nachfolgenden Datenübertragung.

Eine noch genauere Aussage erhält man, wenn das Datensignal ebenfalls tiefpaßgefiltert und gleichgerichtet mit dem Ausgangssignal bei Nichtmodulation, das mittels eines Steuersignals SL in einem Speicher S abspeicherbar oder darauf auslesbar ist, mittels Differenzbildung Δ verglichen wird, wobei die Differenz Q' als Geräuschabstand gilt und damit ein Maß für die Fehlerwahrscheinlichkeit ist.

Das erfindungsgemäße Verfahren läßt sich besonders gut in Mobilfunksystemen für die Auswahl des Funkkanals mit der besten Übertragungsqualität, welches Suchproblem beispielsweise bei Funkbereichswechseln auftritt, einsetzen.

## Patentansprüche

1. Verfahren zur Messung der Übertragungsqualität eines FM-WT- Datenkanals, wobei der Empfangspegel gemessen wird, dadurch gekennzeichnet, daß die Messung im nichtmodulierten Betriebszustand und derart erfolgt, daß das Eingangssignal verstärkt (VV), einem Frequenzdiskriminator (D) zugeführt, gefiltert (F) und anschließend gleichgerichtet (G) wird, und daß das so erhaltene Ausgangssignal (Q) als ein Maß für die Übertragungsqualität gewertet wird.

2. Verfahren nach Anspruch 1, dadurch gekennzeichnet, daß die Messung in einer Sendepause erfolgt.

3. Verfahren nach einem der vorhergehenden Ansprüche, dadurch gekennzeichnet, daß das Eingangssignal vorgefiltert wird (AF).

4. Verfahren nach einem der vorhergehenden Ansprüche, dadurch gekennzeichnet, daß das Eingangssignal, der Verstärker (VV) und der Frequenzdiskriminator (D) die Betriebsbandbreite aufweisen.

5. Verfahren nach einem der vorhergehenden Ansprüche, dadurch gekennzeichnet, daß die Messung im modulierten Betriebszustand (Datenübertragung) erfolgt, daß die Differenz (Δ) der Ausgangssignale bei nichtmoduliertem bzw. moduliertem Zustand gebildet wird und daß diese Differenz (Q') als Maß für die Fehlerwahrscheinlichkeit gilt.

**Claims**

1. A method for measuring the transmission quality of an FM ST data channel, wherein the reception level is measured, characterized in that the measurement takes place in the nonmodulated operating state and in such a manner that the input signal is amplified (VV), delivered to a frequency discriminator (D), filtered (F) and then rectified (G), and that the thus-obtained output signal (Q) is used as a standard for the transmission quality.

2. A method as defined by claim 1, characterized in that the measurement takes place during a transmission interruption.

3. A method as defined by one of the foregoing claims, characterized in that the input signal is pre-filtered (AF).

4. A method as defined by one of the foregoing claims, characterized in that the input signal, the amplifier (VV) and the frequency discriminator (D) have the operating bandwidth.

5. A method as defined by one of the foregoing claims, characterized in that the measurement takes place in the modulated operating state (data transmission), that the difference (Δ) of the output signals in the nonmodulated and modulated state is formed, and that this difference (Q') is valid as a standard for the probability of error.

**Revendications**

1. Procédé de mesure de la qualité de transmission sur une voie de télégraphie harmonique à ondes porteuses modulées en fréquence, où le niveau de réception est mesuré, caractérisé en ce que la mesure se fait dans l'état de non-modulation et de telle manière que le signal reçu est préamplifié (VV), injecté à un discriminateur de fréquence (D), filtré (F) et ensuite redressé (G), et en ce que le signal de sortie (Q) ainsi obtenu est exploité comme critère de la qualité de la transmission.

2. Procédé selon la revendication 1, caractérisé en ce que la mesure se fait pendant les pauses d'émission.

3. Procédé selon l'une des revendications precédéntes, caractérisé en ce que le signal d'entre est préfiltré (AF).

4. Procédé selon l'une des revendications précédentes, caractérisé en ce que le signal d'entrée, le préamplificateur (VV) et le discriminateur de fréquence (D) présentent la largeur de bande de service.

5. Procédé selon l'une des revendications précédentes, caractérisé en ce que la mesure se fait dans l'état de modulation (transmission de données), que la différence (Δ) est formée entre les signaux de sortie à l'état de modulation et de non-modulation, et que cette différence (Q') est utilisée comme critère de la probabilité d'erreurs.